Europäisches Patentamt

European Patent Office

Office européen des brevets

(11) Veröffentlichungsnummer: **0 181 952**
**B1**

(12) **EUROPÄISCHE PATENTSCHRIFT**

(45) Veröffentlichungstag der Patentschrift: **25.04.90**

(51) Int. Cl.⁵: **H 04 N 9/64**

(21) Anmeldenummer: **84113893.6**

(22) Anmeldetag: **16.11.84**

(54) Interface-Schaltung in einem Farbfernsehempfänger zum Anschluss eines Home-Computers.

(43) Veröffentlichungstag der Anmeldung:
**28.05.86 Patentblatt 86/22**

(45) Bekanntmachung des Hinweises auf die
Patenterteilung:
**25.04.90 Patentblatt 90/17**

(84) Benannte Vertragsstaaten:
**DE FR NL**

(56) Entgegenhaltungen:
**EP-A-0 070 465**
**FR-A-2 426 294**

(73) Patentinhaber: **Deutsche ITT Industries GmbH**
**Hans-Bunte-Strasse 19 Postfach 840**
**D-7800 Freiburg (DE)**

(72) Erfinder: **Mehrgardt, Sönke, Dr.**
**Häglestrasse 26**
**D-7801 March-Neuershausen (DE)**

**Beschreibung**

Die Erfindung betrifft eine Interface-Schaltung in einem Farbfernsehempfänger, der ein nach einem Zwischenzeilenverfahren erzeugtes, Halbbilder enthaltendes Videosignal nach Analog-Digital-Wandlung mittels eines Abtastsignals, ferner nach digitaler Signalverarbeitung in einem vom Abtastsignal und/oder einer seiner Harmonischen als Taktsignal getakteten digitalen Schaltungssystem und schließlich nach Digital-Analog-Wandlung mit doppelter Zeilenfrequenz wiedergibt, zum Anschluß eines Home-Computers, der mindestens einstellige digitale Farb-Zeichensignale abgibt, deren minimale Impulsdauer nur annähernd gleich der Periodendauer des Taktsignals ist, vgl. den Oberbegriff des Anspruchs 1.

Bei Farbfernsehempfängern nach dem Zwischenzeilenverfahren, die die zeilenweise Wiedergabe des Videosignals mit doppelter Zeilenfrequenz ermöglichen, handelt es sich um solche, bei denen das analoge Videosignal nach einer Analog-Digital-Wandlung digital verarbeitet und nach Digital-Analog-Wandlung der Bildröhre zugeführt wird. Dadurch, daß das digitale Videosignal in einen Zeilenspeicher zeilenfrequent eingeschrieben und daraus doppelt-zeilenfrequent ausgelesen wird wie in EP—A—0070465 beschrieben, kann das dem Betrachter auf der Bildröhre dargebotene Bild flimmerfreier gemacht werden als bei Farbfernsehempfängern ohne doppeltzeilenfrequente Wiedergabe.

Mit üblichen Farbfernsehempfängern ist es möglich, die von einem Home-Computer abgegebenen Zeichensignale wiederzugeben. Hierzu werden üblicherweise die für den Fernsehempfang gewöhnlich erforderlichen Teilschaltungen nicht benutzt und die Zeichensignale, die von Horizontal- und Vertikalsynchronsignalen begleitet sind, der Bildröhre zugeführt.

Diese einfache Wiedergabemöglichkeit von Home-Computer-Zeichensignalen ist bei den eingangs geschilderten Farbfernsehempfängern mit digitaler Signalverarbeitung etc. nicht ohne weiteres möglich, da das Taktsignalsystem des Home-Computers und das des Farbfernsehempfängers nicht miteinander frequenz- und phasensynchronisiert sind.

Der in den Ansprüchen gekennzeichneten Erfindung liegt daher die Aufgabe zugrunde, eine Interface-Schaltung eines Farbfernsehempfängers der eingangs geschilderten Art zum Anschluß eines Home-Computers anzugeben, der die eingangs geschilderten Zeichensignale abgibt.

Durch die Erfindung wird unter anderem erreicht, daß die einzelnen Zeichen (Buchstaben, Zahlen, etc.) auf dem Bildschirm mit konstanter Helligkeit und Farbe sichtbar sind und somit eine gleichmäßig helle bzw. pro Farbe gleichmäßig farbgesättigte Schrift auf dem gesamten Bildschirm erscheint.

Die Erfindung wird nun anhand der Figuren der Zeichnung näher erläutert.

Fig. 1 zeigt schematisch in Form eines Block-schaltbilds ein Ausführungsbeispiel einer Teil-schaltung der Erfindung,

Fig. 2 zeigt ebenfalls schematisch als Blockschaltbild ein Ausführungsbeispiel einer andern Teilschaltung der Erfindung,

Fig. 3 zeigt schematisch ein Ausführungsbeispiel einer Interface-Schaltung nach der Erfindung und

Fig. 4 zeigt das Blockschaltbild eines Ausführungsbeispiels einer Weiterbildung der Anordnung nach Fig. 3.

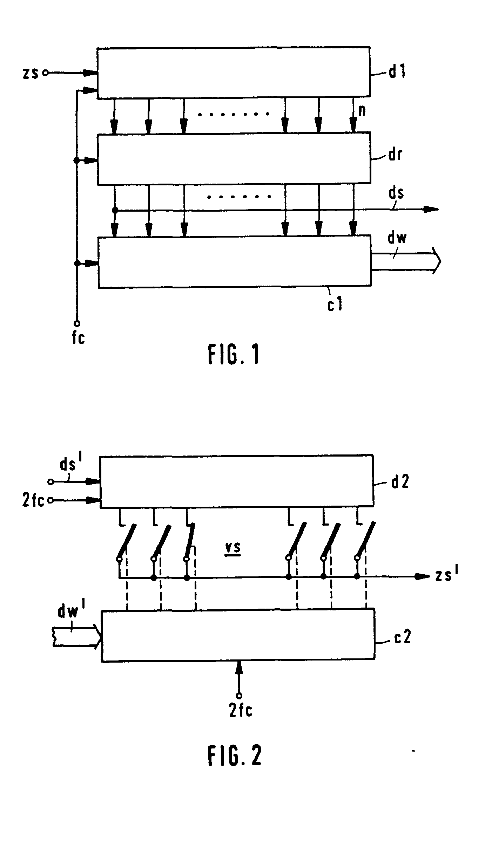

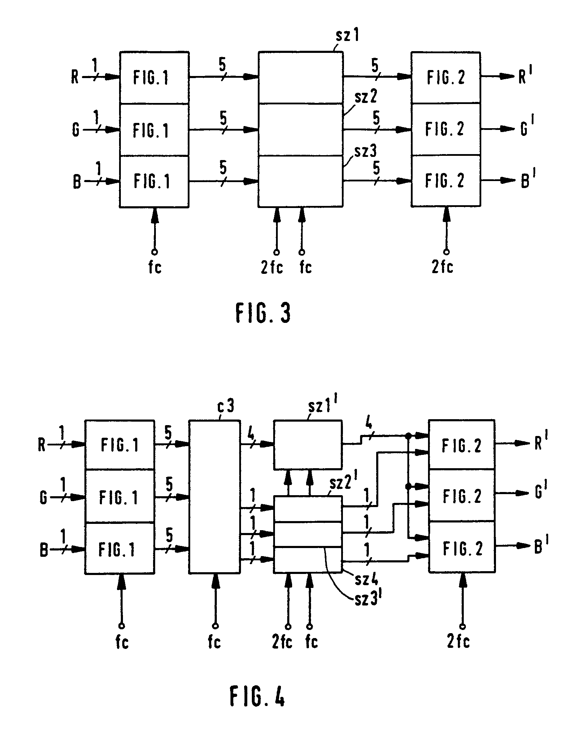

Das im Blockschaltbild der Fig. 1 gezeigte Ausführungsbeispiel einer eingangsseitigen Teilschaltung der Erfindung enthält die erste digitale Verzögerungsleitung d1, die aus signalflußmäßig in Serie geschalteten n gleichen Verzögerungsstufen besteht und deren Verzögerungszeit gleich der Periodendauer des Taktsignals fc ist;

dessen Frequenz ist bei den eingangs erwähnten Farbfernsehempfängern mit digitaler Signalverarbeitung gewöhnlich das Vierfache der Farbträgerfrequenz, also bei NTSC-Empfängern rund 14,3 MHz, bei PAL-Empfängern etwa 17,7 MHz und bei SECAM-Empfängern etwa 17,1 MHz.

Digitale Verzögerungsleitungen der hier benötigten Art sind beispielsweise in der veröffentlichen europäischen Anmeldung EP—A—116 669 beschrieben. Das Wesentliche dieser Verzögerungsleitungen ist, daß sie auf eine exakt konstante Verzögerungszeit einstellbar sind und diese verzögerungszeit mittels eines Regelkreises automatisch konstant gehalten wird. Die Anzahl n der Verzögerungsstufen kann an sich beliebig sein, jedoch bietet es sich als vorteilhaft an, die Zahl n als Zweierpotenz zu wählen, was den unten noch anzugebenden Vorteil hat.

Jeder Ausgang einer Verzögerungsstufe der Verzögerungsleitung d1 liegt am Dateneingang einer Stufe des Datenregisters dr, dessen dynamischen Write-Enable-Eingang das Taktsignal fc zugeführt ist. Somit übernimmt das Datenregister dr entweder bei jeder Vorder- oder bei jeder Rückflanke eines Taktimpulses die zu diesem Zeitpunkt in der Verzögerungsleitung d1 stehenden Daten, die dort ein Zeichensignal zs repräsentieren. Da die Impulsdauer eines solchen Zeichensignals im allgemeinen geringfügig größer ist als die Verzögerungszeit der Verzögerungsleitung d1, wird entweder die Vorder- oder die Rückflanke eines solchen Zeichensignal-Impulses in Form eines Null-Eins- oder Eins-Null-Übergangs in der Verzögerungsleitung enthalten sein und in das Datenregister übernommen werden. Aufgrund der Nichtsynchronität zwischen Taktsignal und Zeichensignalen wird über mehrere Taktperioden gesehen die erwähnte Impulsflanke des Zeichensignals durch die Verzögerungsleitung d1 wandern.

Die Ausgänge des Datenregisters dr liegen am Eingang des vom Taktsignal fc getakteten ersten Codewandlers c1, dessen Ausgangsdatenwort dw nichtredundant ist und zusammen mit dem Datensignal ds der ersten Stufe des Datenregisters dr als Ausgangssignal in dieser Teilschaltung dient. Der Codewandler c1 wandelt den vom Datenregister dr übernommenen "Thermometer"-Code in einen nichtredundanten Code um, was für den Fall, daß n eine zweierpotenz ist (siehe oben), bedeutet, daß das Datenwort dw z.B. im natürlichen Binärcode oder einem anderen nichtredundanten Binärcode (Gray-Code etc.) vorliegt.

Die Fig. 3 zeigt non, wie drei Teilschaltungen entsprechend Fig. 1 benutzt werden, um z.B. einstellige R- bzw. G- bzw. B-Zeichensignale R, G, B jeweils einer Teilschaltung nach Fig. 1 zuzuführen, und wie das Ausgangsdatenwort dw zusammen mit dem Datensignal ds jeweils dem Zeilenspeicher sz1 bzw. sz2 bzw. sz3 eingangsseitig zugeführt sind, Diese drei Zeilenspeicher sind sowohl vom Taktsignal fc als auch mit dem doppeltfrequenten Taktsignal 2fc getaktet und übernehmen das Ausgangsdatenwort dw und das Datensignal ds zeilenfrequent, lesen es jedoch doppeltzeilenfrequent aus.

Mittels der in vergleichbarer Weise wie Fig. 1 als Blockshaltbild eines Ausführungsbeispiels einer ausgangsseitigen Teilschaltung aufgebauten Anordnung nach Fig. 2, die entsprechend Fig. 3 je einmal den drei Zeilenspeichern sz1, sz2, sz3 zugeordnet ist, werden die an deren Ausgänge auftretenden, zeitlich versetzten Ausgangsdatenwörter dw' und Datensignale ds' zu den entsprechenden korrigierten Zeichensignalen R', G', B' weiterverarbeitet. Im einzelnen enthält die Anordnung nach Fig. 2 die zweite digitale Verzögerungsleitung d2, die wiederum aus n Serie geschalteten gleichen Verzögerungsstufen besteht, deren Verzögerungszeit gleich der halben Periodendauer des Taktsignals fc ist. Auch hierfür kann die oben als vorbeschrieben genannte Verzögerungsleitung verwendet werden. Der zweiten Verzögerungsleitung d2 ist das zeitlich versetzte Datensignal ds' zugeführt.

Ferner enthält die Anordnung nach Fig. 2 den zweiten Codewandler c2, der von dem Taktsignal 2fc mit der doppelten Frequenz des Taktsignals fc getaktet ist und dessen Eingang das zeitlich versetzte Ausgangsdatenwort dw' zugeführt ist. Der Ausgangscode des zweiten Codewandlers c2 ist der Eins-Aus-n-Code. Jede der n Ausgangsleitungen des Codewandlers c2 liegt an einem entsprechenden Steuereingang eines Ein-Aus-Schalters des elektronischen Vielfachumschalters vs, an deren miteinander verbundenen Ausgängen das im Farbfernsehempfänger weiterzuverarbeitende Zeichensignal zs' abzunehmen ist, welche Signale in Fig. 3 die Zeichensignale R', B', G' sind. Der Eingang jedes Ein-Aus-Schalters des Vielfachumschalters vs ist mit jeweils einem Ausgang einer Verzögerungsstufe der zweiten Verzögerungsleitung d2 verbunden.

Die Fig. 4 zeigt eine dahingehende Weiterbildung der Anordnung nach Fig. 3, daß die Zeilenzahl der Zeilenspeicher etwa auf die Hälfte reduziert ist. Hierzu ist zunächst der dritte Codewandler c3 vorgesehen, dem eingangsseitig die drei Ausgangsdatenworte dw der drei ersten Codewandler c1 sowie die drei Datensignale ds der jeweils ersten Stufe der drei Datenregister dr zugeführt sind. Der dritte Codewandler c3 führt zu jedem Taktzeitpunkt lediglich das größte der drei Ausgangsdatenworte dw an den ersten Teil-Zeilenspeicher sz1' weiter, während er die drei Datensignale dem zweiten bzw. dritten bzw. vierten Teil-Zeilenspeicher sz2', sz3', sz4 zuführt. Der Ausgang des ersten Teil-Zeilenspeichers sz1' ist mit dem jeweils entsprechenden Eingang der drei zweiten Codewandler c2 verbunden, während der jeweilige Ausgang der restlichen Teil-Zeilenspeicher sz2', sz3', sz4' am zugeordneten Eingang einer der drei zweiten Verzögerungsleitungen angeschlossen ist.

In den Fig. 3 und 4 ist mittels der Zahlen an den in den Verbindungsleitungen angebrachten Schrägstrichen angedeutet, wieviele Stellen die auf diesen Leitungen laufenden Digitalsignale haben und wieviele Leitungen somit die entsprechenden Busse bei Parallelverarbeitung aufweisen. Für dieses Zahlenbeispiel ist angenommen, daß die Zeichensignale einstellig sind und daß $n=2^4=16$ ist, so daß die Ausgangsdatenwörter vierstellig sind. Aus diesem Zahlenbeispiel ergibt sich somit ohne weiteres, daß bei der Anordnung nach Fig. 3 ein Gesamtzeilenspeicher für 15 Zeilen erforderlich ist, während der entsprechende Gesamtzeilenspeicher bei der Anordnung nach Fig. 4 nur 7 Zeilen aufzuweisen braucht. Da der dritte Codewandler c3 einfacher aufgebaut sein kann als die entfallenden Zeilen des Gesamtzeilenspeichers, ergibt sich bei der Anordnung nach Fig. 4 insgesamt ein einfacherer Aufbau, was im Falle der Realisierung der Erfindung in Form einer integrierten Schaltung insgesamt eine geringere Kristallfläche ergibt.

Da es sich bei der Anordnung nach der Erfindung um eine reine Digitalschaltung handelt, ist ihre Realisierung als integrierte Schaltung besonders günstig mittels Isolierschicht-Feldeffekt-Transistoren, also in der sogenannten MOS-Technik, möglich.

**Patentansprüche**

1. Interface-Schaltung in einem Farbfernsehempfänger, der ein nach einem Zwischenzeilenverfahren erseugtes, Halbbilder enthaltendes Videosignal nach Analog-Digital-Wandlung mittels eines Abtastsignals, ferner nach digitaler Signalverarbeitung in einem vom Abtastsignal und/oder einer seiner Harmonischen als Taktsignal (fc) getakteten digitalen Schaltungssystem und schließlich nach Digital-Analog-Wandlung mit doppelter Zeilenfrequenz wiedergibt, zum Anschluß eines Home-Computers, der mindestens einstellige digitale Farb-Zeichensignale (zs; R, G, B) abgibt, deren minimale Impulsdauer nur annähernd gleich der Periodendauer des Taktsignals (fc) ist, gekennzeichnet durch folgende Merkmale für jedes der drei Farb-Zeichensignale (R, G, B):

— das Zeichensignal (zs) ist einer ersten digitalen, aus seriengeschalteten und aus n gleichen Verzögerungsstufen bestehenden Verzögerungsleitung (d1) zugeführt, deren Verzögerungszeit gleich der Periodendauer des Taktsignals (fc) ist,

— jeder Ausgang einer Verzögerungsstufe liegt am Dateneingang einer Stufe eines Datenregisters (dr), dessen dynamischen Write-Enable-Eingang das Taktsignal (fc) zugeführt ist,

— die Ausgänge des Datenregisters (dr) liegen am Eingang eines vom Taktsignal (fc) getakteten ersten Codewandlers (c1), dessen Ausgangsdatenwort (dw) nichtredundant ist und zusammen mit dem Datensignal (ds) der ersten Stufe des Datenregisters (dr) dem Eingang eines Zeilenspeichers (sz1, sz2, sz3) zugeführt ist, in den mit der Frequenz des Taktsignals (fc) eingeschrieben und aus dem mit der doppelten Frequenz des Taktsignals ausgelesen wird,

— derjenige Ausgang des Zeilenspeichers, der dem Ausgangsdatenwort (dw) zugeordnet ist, liegt am Eingang eines mit der doppelten Frequenz des Taktsignals getakteten zweiten Codewandlers (c2), dessen Ausgangscode der Eins-aus-n-Code ist und dessen Ausgänge am jeweiligen Steuereingang der Ein-Aus-Schalter eines elektronischen Vielfachschalters (vs) liegen, an deren miteinander verbundenen Ausgängen das im Farbfernsehempfänger weiterzuverarbeitende Zeichensignal (zs′, R′, B′, G′) abzunehmen ist, und

— der Ausgang des Zeilenspeichers, der dem Datensignal (ds) zugeordnet ist, liegt am Eingang einer zweiten digitalen aus seriengeschalteten n gleichen Verzögerungsstufen bestehenden Verzögerungsleitung (d2), deren Verzögerungszeit gleich der halben Periodendauer des Taktsignals (fc) ist und von der jeder Ausgang einer Verzögerungsstufe am Eingang eines Ein-Aus-Schalters des Vielfachumschalters (vs) liegt.

2. Interface-Schaltung nach Anspruch 1, dadurch gekennzeichnet, daß zwischen den Ausgang der drei ersten Codewandler (c1) sowie den Ausgang der jeweils ersten Stufe der drei Datenregister (dr) und den jeweiligen Eingängen der drei Zeilenspeicher (zs1, zs2, zs3) ein dritter Codewandler (c3) angeordnet ist, der dem Zeilenspeicher nur das größte der drei Ausgangsdatenworte (dw) sowie die drei Datensignale (ds) zuführt, und daß der dem größten Datenwort zugeordnete Ausgang des Zeilenspeichers mit dem jeweiligen Eingang der drei zweiten Codewandler (c2) sowie der einem jeweiligen Datensignal zugeordnete Ausgang des Zeilenspeichers jeweils mit dem Eingang einer der drei zweiten Verzögerungsleitungen (d2) verbunden ist.

**Revendications**

1. Circuit d'interface pour un récepteur de télévision en couleurs, qui reproduit, avec une fréquence égale au double de la fréquence des lignes, un signal vidéo produit au moyen d'un procédé d'entrelacement des lignes et contenant des trames, après conversion analogique/numérique à l'aide d'un signal d'échantillonnage, puis traitement numérique du signal dans un système de circuit numérique commandé de façon cadencée par le signal d'échantillonnage et/ou l'un de ses harmoniques en tant que signal de cadence (fc) et enfin après conversion numérique/analogique pour le raccordement d'un ordinateur domestique, qui délivre au moins des signaux de caractères en couleurs (zs; R, G, B) au moins à un chiffre, dont la durée minimale d'impulsion est seulement approximativement égale à la durée de la période du signal de cadence (fc), caractérisé par les caractéristiques suivantes pour chacun des trois signaux de caractères en couleurs (R, G, B):

— le signal de caractère (zs) est envoyé à une première ligne à retard numérique (d1) constituée par n étages identiques de retardement branchés en série et qui produit un retard égal à la durée de la période du signal de cadence (fc),

— chaque sortie d'un étage de retardement est raccordé à l'entrée de données d'un étage d'un registre de données (dr), à l'entrée dynamique de validation d'enregistrement duquel est envoyé le signal de cadence (fc),

— les sorties du registre de données (dr) sont raccordées à l'entrée d'un premier convertisseur de code (c1), qui est commandé de façon cadencée par le signal de cadence (fc) et dont le mot de données de sortie (dw) est non-redondant et est envoyé, conjointement avec le signal de données (ds) du premier étage du registre de données (dr), à l'entrée d'une mémoire de lignes (sz1, sz2, sz3), dans laquelle l'enregistrement est réalisé à la fréquence du signal de cadence (fc) et à partir de laquelle la lecture est exécutée avec la fréquence double de celle du signal de cadence,

— la sortie de la mémoire de lignes, qui est associée au mot de données de sortie (dw), est raccordée à l'entrée d'un second convertisseur de code (c2), qui est commandé de façon cadencée avec une fréquence double de la fréquence du signal de cadence et dont le code de sortie est le code un-parmi-n, et dont les sorties sont raccordées à l'entrée respective de commande des interrupteurs marche-arrêt d'un interrupteur électronique multiple (vs), le signal (zs′, R′, B′, G′), dont le traitement doit se poursuivre dans le récepteur de télévision en couleurs, pouvant être prélevé sur les sorties des interrupteurs, qui sont reliées entre elles, de cet interrupteur multiple, et

— la sortie de la mémoire de ligne, qui est associée au signal de données (ds), est raccordée à l'entrée d'une seconde ligne à retard numérique (d2), qui est constituée par n étages identiques de retardement branchés en série et qui produit un retard égal à la moitié de la période du signal de cadence (fc), chaque sortie d'un étage de retardement de cette ligne à retard étant raccordé à l'entrée d'un interrupteur marche-arrêt de l'interrupteur multiple (vs).

2. Circuit d'interface suivant la revendication 1, caractérisé par le fait qu'entre la sortie des trois premiers convertisseurs de code (C1) et la sortie de chaque premier étage des trois registres de données (dr) et les entrées respectives des trois mémoires de lignes (zs1, zs2, zs3) est disposé un troisième convertisseur de code (c3), qui envoie à la mémoire de lignes uniquement le plus grand des trois mots de données de sortie ainsi que les trois signaux de données (ds), et que la sortie, associée au plus grand mot de données, de la mémoire de lignes est reliée à l'entrée respective des trois seconds convertisseurs de code (c2), et la sortie de la mémoire de lignes, associée à un signal respectif de données, est reliée respectivement à l'entrée de l'une des trois secondes lignes à retard (d2).

## Claims

1. Interface circuit in a color-television receiver which reproduces a video signal containing interlaced fields after analog-to-digital conversion by means of a sampling signal, after digital signal processing in a digital circuit system controlled by the sampling signal and/or one of the harmonics thereof, which are/is used as clock signals/a clock signal (fc), and after digital-to-analog conversion at twice the horizontal frequency, for providing the connection between the color-television receiver and a home computer which delivers at least one-bit digital color character signals (zs; R, G, B) whose minimum pulse duration is only approximately equal to the period of the clock signal (fc), characterized by the following features for each of the three color character signals (R, G, B):

— the character signal (zs) is fed to a first digital delay line (d1) consisting of n like, cascaded delay stages and having a delay equal to the period of the clock signal (fc);

— the output of each of the delay stages is coupled to the data input of one of the stages of a data register (dr) to whose dynamic write-enable input the clock signal (fc) is applied;

— the outputs of the data register (dr) are connected to the input of a first code converter (c1) which is clocked by the clock signal (fc) and whose output data word (dw) is nonredundant and, together with the data signal (ds) from the first stage of the data register (dr), is fed to the input of a line memory (sz1, sz2, sz3) into which data is written at the frequency of the clock signal (fc), and from which data is read at twice the frequency of the clock signal;

— the output of the line memory which is assigned to the output data word (dw) is coupled to the input of a second code converter (c2) clocked at twice the frequency of the clock signal, whose output code is the 1-out-of-n code, and each of whose outputs is coupled to the control input of one of the ON/OFF switches of an electronic multiple switch (vs), the interconnected outputs of said ON/OFF switches providing the character signal (zs', R', B', G') to be further processed in the color-television receiver, and

— that output of the line memory which is assigned to the data signal (ds) is coupled to the input of a second digital delay line (d2) consisting of n like, cascaded delay stages and having a delay equal to half the period of the clock signal (fc), with the output of each of the delay stages coupled to the input of one of the ON/OFF switches of the multiple switch (vs).

2. An interface circuit as claimed in claim 1, characterized in that between the output of the three first code converters (c1) and the outputs of the first stages of the three data registers (dr), on the one hand, and the associated inputs of the three line memories (zs1, zs2, zs3), on the other hand, a third code converter (c3) is interposed which feeds only the longest of the three output data words (dw) and the three data signals (ds) to the line memory, and that the line-memory output assigned to the longest data word is connected to the associated inputs of the three second code converters (c2), while each of the line-memory outputs assigned to a data signal is connected to the input of one of the three second delay lines (d2).

FIG. 1

FIG. 2

EP  0 181 952  B1

FIG. 3

FIG. 4